# EUROPEAN PATENT APPLICATION

(11) **EP 3 385 702 A1**
(43) Date of publication of application: **10.10.2018**
(21) Application number: 17165232.4
(22) Date of filing: 06.04.2017
(51) Int. Cl.: G01N 21/19, G01N 33/00, G01N 21/77, G01N 21/78

(54) **HYDROGEN SENSING SYSTEM WITH DICHROIC ELEMENT, AND METHOD EMPLOYING THE SAME**

(71) Applicant: ABB Schweiz AG, 5400 Baden (CH)
(72) Inventor: VAN MECHELEN, Jacobus Lodevicus Martinus, 8104 Regensdorf (CH); MÜLLER, Georg, 8152 Glattpark (CH); GREMAUD, Robin, 8048 Zürich (CH)
(74) Representative: ABB Patent Attorneys

(57) **Abstract**

An optical gas sensing system (1) for sensing hydrogen in a fluid is provided. The system comprises: an optical sensor (100) comprising a fiber (15), the fiber including at an end portion a sensor element (21) with a sensing layer (22) configured to change its dielectric properties depending on a gas partial pressure at the sensing layer (22); at least one light source (55) for coupling light with a first spectrum into the optical sensor (100); a dichroic element (35) provided in the light path between the light source (55) and the sensor element (21); a light detection unit (58) comprising a light dispersion device (59) and at least two photodetectors (61); wherein the light detection unit is configured for detecting light reflected by the dichroic element (35) and light reflected or transmitted by the sensor element (21), after it has passed the light dispersion device (59), with the at least two photodetectors (61); and a control unit (70) operatively coupled to the light detection unit (58). Further, a respective detection method for a gas in a fluid is provided, and electrical transformers employing the gas sensing system and method.

## Description

### Field

Aspects of the present disclosure relate to a hydrogen sensor, a hydrogen sensing system employing the same, and to an electrical device including such a sensing system, which is also suitable to detect gases other than hydrogen. In particular, aspects relate to a hydrogen sensor and a hydrogen sensing/detection system with such a sensor, having improved calibration properties, suitable for liquid-filled electrical equipment.

### Technical background

Insulation-liquid-filled electrical equipment, such as oil-filled shunt reactors, bushings, and especially transformers such as power and distribution transformers, are filled with insulation liquid, in particular oil, for cooling and electrical insulation purposes. Faults inside the electrical equipment as well as degradation of the insulation liquid and of other insulation components such as insulation paper provided within the electrical equipment can form decomposition gasses which mainly dissolve into the liquid. This is valid for equipment employing both mineral oil and oil from natural sources.

It is important to detect such faults, errors and degradations early, since especially transformers are important components of the electrical grid, and their failure can be very costly. Hence, a transformer is supposed to operate continuously and as error-free as possible over many years or even decades.

The quantity and composition of the decomposition gases is dependent on the underlying defect: A large fault with high energy content, such as rapid overheating or arcing, causes large amounts of gas produced in a short period of time, whereas the amount of gas produced by a small fault may be relatively smaller. Also, the relative concentrations of the different gasses dissolved might indicate the specific type of fault. Thus, if the nature and amount of individual gases dissolved in the insulation liquid are known, the occurrence of a change of the concentration of a specific gas in the oil can be used to identify an electrical fault in the equipment. It is known that one of the most important indicators for electrical failure in oil insulated transformers is the occurrence of hydrogen gas dissolved in the oil, which is for example produced at a faulty portion of an insulation of a winding of the transformer, by thermal or electrical decomposition of the oil. For this reason, it is desirable that such errors, which may eventually cause complete failure of the transformer, can be detected as early as possible by identifying a rise in hydrogen concentration. This should ideally be possible at a stage when appropriate counter-measures may still be taken before serious and potentially costly malfunction occurs.

At a very early stage of such an electrical fault, only a very small amount of hydrogen gas may be produced, which dissolves in the oil and thus a concentration of dissolved hydrogen builds up in the oil over a longer period of time - whereby the hydrogen concentration in the oil may, at least during an early phase of the failure, even be below a threshold at which it can be detected with most known detection methods.

For detecting even small traces of hydrogen in transformer oil, since a few years on-line hydrogen monitoring devices are known which include thin-film based fiber-optic sensors, wherein a sensing material changes its optical properties upon an exposure to hydrogen dissolved in the oil. One such system for detecting hydrogen gas is described as an optical switching device in WO 2007 049965 A1.

The change of the optical properties of the thin metal (alloy) film in the technology described above depends both on the hydrogen concentration and on the temperature of the oil, which is typically also the sensor temperature. To relate a change of the optical properties of the sensor into a quantitative measurement, that is, a change in hydrogen concentration in the transformer oil (or in other fluids), some kind of calibration procedure needs to be performed in order to be able to determine the hydrogen concentration with the desired accuracy.

In view of the above and for other reasons, there is a need for the present invention.

### Summary of the invention

In view of the above, an optical gas sensing system according to claim 1, and a method of determining a gas concentration in a fluid according to claim 10 are provided.

According to an aspect, an optical gas sensing system for detecting hydrogen in a fluid is provided. It comprises an optical sensor comprising a fiber, the fiber including at an end portion a sensor element with a sensing layer configured to change its optical properties depending on a gas partial pressure at the sensing layer; at least one light source for coupling light with a first spectrum into the optical sensor; a dichroic element provided in the light path between the light source and the sensor element; a light detection unit comprising a light dispersion device and at least two photodetectors, wherein the light detection unit is configured for detecting light reflected by the dichroic element and light reflected or transmitted by the sensor element, after it has passed the light dispersion device, with the at least two photodetectors; and a control unit operatively coupled to the light detection unit.

According to a second aspect, a method for determining a gas concentration in a fluid is provided. It comprises providing a sensing system of the first aspect; coupling light with a first spectrum into the optical sensor having a sensing layer; dispersing light which is reflected by the dichroic element, and light reflected or transmitted by the sensing layer, with a light dispersion device; detecting the dispersed light with at least two photodetectors, preferably with an array of photodetectors; using an intensity information for a first spectral fraction of the dispersed light as a normalization information to determine the gas partial pressure from the amplitude information derived from at least a second spectral fraction.

Further advantages, features, aspects and details that can be combined with embodiments described herein are evident from the dependent claims, the description and the drawings.

The provided optical sensor and detection system employing it, as well as the described methods for operation and uses thereof in electrical devices, all according to embodiments of the invention, allow for calibration of thin-film gas sensors during operation, that is in real-time / online. Hence, a calibration of the sensor can be carried out continuously, intermittently, or on request. As a sensor according to embodiments only requires one additional dichroic element placed into the light path between the light source and the hydrogen sensitive layer, which may be added during production, the cost of the sensor of embodiments is not significantly increased in comparison to a conventional optical thin-film metal-based sensor without such a layer.

Thus, gas measurement systems are possible which deliver constantly high measurement precision over the lifetime of the sensor, without the need of extra calibration measurements for the light source, the optical parts, etc. In the proposed calibration process, parameters such as intensity fluctuations of the light source, drift of the detector and/or the control- and sensor electronics are automatically taken into account, as well as changes in the characteristics of the optical couplings in the system et cetera.

While in this disclosure, most embodiments and examples are directed to a hydrogen sensor and hydrogen sensing system and method, employed for detecting hydrogen in a fluid being transformer oil, these are only exemplary, non-limiting examples. In embodiments, the concept may also be employed for the detection of other gases than hydrogen, and in other fluids than transformer oil. As an example, concentrations of a gas other than hydrogen in a gas mixture - or a liquid - may be detected. In such embodiments, the material of the sensing layer has to be configured according to the gas to be detected, which is a standard task for the skilled person.

### Brief description of the Figures

More details will be described in the following with reference to the figures, wherein
- Fig. 1: is a schematic view of a gas sensing system according to embodiments, with a separate detailed view on a part of the optical sensor;
- Fig. 2: is a schematic view of exemplary frequency spectra according to embodiments, on top the spectrum of an exemplary light source, below an exemplary spectrum of the light reflected by the optical sensor combined with light reflected by the dichroic element;
- Fig. 3: is a schematic view showing the working principle of a light detection unit as employed in embodiments, with a spectrum of the reflected light dispersed by a light dispersion device.

### Detailed Description of Aspects of the Invention

As used herein, the term "fluid" is intended to be both representative for gases and liquids. It is, however, mainly used to be representative of an insulation liquid, particularly an oil, which is part of the insulation and/or cooling system of an electrical device, more particularly of a power transformer.

As used herein, "dichroic element" is intended to mean an element which acts as a dichroic filter, thin-film filter, or interference filter in a hydrogen sensor as described herein. It serves as a color filter, used to selectively reflect light of a certain (or several) wavelength or wavelength regime, while mainly transmitting other wavelengths. In embodiments, the dichroic element may function according to various principles, wherein variants not disclosed in here are regarded to also fall under the scope of this disclosure.

As used herein, the term "calibration" is intended to mean that in a hydrogen sensing system according to embodiments, apparative and/or process-inherent measures are taken to minimize or ideally nullify an influence of - per se unknown - intensity fluctuations of the light source(s), as well as of light intensity fluctuations due to variations in the optical couplings or the like, from having an influence on the accuracy on the measurement results of the hydrogen sensing system. Thereby, the point in time at which a calibration itself is carried out can be arbitrarily chosen, for example before, after, or during an actual measurement carried out with the hydrogen sensing system. A continuous, or frequently carried out, calibration can be seen as advantageous, as this takes into account intensity variations or fluctuations in real time or at least nearly in real time, thus enhancing precision and reliability of the readings produced by the system.

As used herein, "substrate" is intended to mean a physical body on which the sensing layer, and optionally also the dichroic element, are provided in embodiments. The substrate is from any material transparent to the wavelengths employed according to embodiments. Typically, the substrate is an optical fiber, more precisely an end portion or end face of an optical fiber. The optical fiber is typically, but not necessarily, a single-mode fiber.

As used herein, metal alloys defined by a formula with atomic percentage values typically adding to 100 percent, such as, for example, Mg₅₂Ni₂₀Zr₃₅, are meant to also include substances with a composition deviating from that with the exact numbers provided. Typically, alloys having a composition wherein each number, independently from each other, has a tolerance of +/-15 percent, are still regarded to fall under the metal alloy provided by provision of the exact formula, such as the example above, also if the single numbers do not add up to 100 in total. Also, as used herein, such alloys may comprise further, non-named substances such as chemical elements of smaller amounts, such as up to about 2 percent each, but not more than about 10 percent in total.

In the following, some aspects of the invention are described in detail. Aspects and parts of aspects are independent of each other and can be combined in any manner. For example, any aspect or embodiment described in this document can be combined with any other aspect or embodiment, as long as the combinations achieved are technically feasible.

First, some general possible aspects relating to the hydrogen sensor are described. The sensor is suitable and adapted for sensing a status condition of an insulation-liquid-filled electrical equipment. Herein, electrical equipment refers to any equipment such as shunt reactors, bushings and transformers. The invention is particularly suited for the insulation liquid being insulation oil, be it on a mineral basis or from organic sources, such as palm oil. The invention is further particularly suited for the electrical equipment being a transformer, such as a power or distribution transformer, and even more particularly for an oil-filled transformer.

The status condition of the electrical equipment is herein expressed by the hydrogen content (or hydrogen concentration) of the insulation liquid, which is a reliable indicator of various conditions, in particular fault conditions. The hydrogen content is defined as the amount of hydrogen dissolved in the insulation liquid (e.g., in ppm). A hydrogen sensitive layer (henceforth also called sensing layer) of an optical sensor is arranged in communication with the fluid (insulation liquid, oil), and is preferably immersed in the insulation liquid, so that the amount of hydrogen dissolved in the insulation liquid results in a characteristic partial pressure of hydrogen at the optical sensor, this partial pressure being a function of the hydrogen content (in ppm) in the insulation liquid. This relation may depend on additional parameters such as the temperature of the insulation liquid and/or of the hydrogen sensitive layer, and on the type of oil used in the transformer. Herein, the term "hydrogen" may refer to hydrogen molecules or atoms (which may be radicals). As used herein, the sensing layer "being in communication with a fluid" means that the gaseous components of interest present in the fluid, in particular hydrogen, may reach the sensing layer, even if other layers for catalysis, protection or the like are located between the sensing layer and the fluid. The metal alloy of the sensing layer reacts with this hydrogen from the fluid, which diffuses through a protection layer, and builds a metal-alloy hydride system. The latter reaction is a reason for the change in optical properties of the sensing layer when hydrogen is present, which is used for a hydrogen detection, or if desired the detection of other gases, in embodiments.

Next, some aspects relating to the optical sensor for detecting hydrogen are described in more detail. The optical sensor for detecting hydrogen is optically coupled to a light source for receiving light from the light source. The optical sensor has a sensing layer that changes its optical response - due to the change of its dielectric properties - with respect to the received light, in particular its reflectance, depending on an amount of hydrogen present in the sensing layer. This means, a changing hydrogen partial pressure also leads to a change in optical properties of the sensing layer. As the sensing layer is part of the optical sensor, the optical sensor also changes its reflectance and transmittance. While throughout most embodiments described herein, the light which is reflected by the sensing layer is employed for measurements, other embodiments may employ light transmitted by (or through) the sensing layer.

As stated above, the amount of hydrogen can qualitatively be defined in terms of a partial pressure of hydrogen at the optical sensor, which is directly related to an amount of hydrogen (in ppm) dissolved in the insulation liquid. Thereby, the reflectance of the optical sensor expresses the amount of hydrogen, and can therefore be taken as a status indicator of the electrical equipment - as a growing hydrogen concentration is an early indication for potential fault of the electrical equipment, as described further above.

According to an aspect, the optical response is a reflection, and the optical sensor (more precisely, its sensing layer) is mounted (e.g. laminated or coated) to an end portion of a light guiding substrate coupling the optical sensor to the light source and to the light detection unit (possibly via other optical conducting materials as well). The light guiding substrate is an optical fiber, wherein the sensing layer is coated to an end surface of a core of the optical fiber. Typically, the sensing layer is part of a multilayer structure, which also comprises a catalyst layer which includes Palladium (Pd). Further, auxiliary layers comprising Titanium (Ti) may be provided between the core of the optical fiber and the sensing layer, and between the sensing layer and the catalyst layer. Also, typically the outermost layer of the multilayer is a coating layer, which protects/shields the sensing layer and the catalyst layer from the insulation liquid, which is typically present in the form of an oil volume.

Optical sensors according to aspects described herein may comprise, additionally to the sensor components described before, an additional dichroic element which is located between the light source and the sensing layer, which is part of a multilayer or sensing stack as described above. The dichroic element allows for a proper calibration process of the sensor at any time before, during or after measurement operation of the sensor. Thereby, at least partly, the same optical path may typically be used for calibration as well as for sensing the hydrogen concentration. For the calibration to work with the optical sensor, a light source for coupling light into the optical sensor is needed which delivers light having a first spectrum. Thereby, the characteristics of the dichroic element of the sensor and the light source(s) are typically adapted to one another. In order to select a suited dichroic element, which acts as a band pass filter, materials have to be selected with a clear difference in optical properties, preferably reflection, between the different wavelength regimes. One (typically: narrow) part of the first spectrum is predominantly reflected by the dichroic element, before it can interact with the sensing layer. Thereby, the intensity of the light reflected by the dichroic element is minor, or not at all, dependent on the reflectance changes which occur in the sensing layer upon hydrogen absorption. Furthermore, the dichroic element is majorly transparent to another part of the first spectrum, which hence passes the dichroic element, is subsequently reflected (or transmitted) at the sensing layer, and can then be used to measure the changes of the reflectance (or transmittance) of the sensing layer of the metal hydride thin film sensor.

In embodiments, the light reflected by the dichroic element and the light reflected by the sensing layer is guided - via a beam splitter - to a light detection unit, which includes a light dispersion device and at least two photodetectors. The light detection unit is configured for detecting light reflected by the dichroic element and light reflected by the sensor element. To this end, the light reflected from both cited elements is passed through the light dispersion device. At least two photodetectors are provided to detect, after the dispersion by the light dispersion device, the light of the different wavelengths reflected by the sensing layer of the optical sensor, and by the dichroic element, respectively. A control unit is operatively coupled to the light detection unit and is configured to determine, from the signals of the at least two photodetectors, a value for the hydrogen concentration in the fluid. Preferably, the at least two photodetectors are part of an array of photodetectors (sensor array), for example a CCD array having a plurality of CCD elements. As the intensity of the photodetector signal which detects the part of the dispersed light stemming from the reflection at the dichroic element is largely insensitive to changes of the reflectance of the sensing layer due to hydrogenation, the signal related to the light reflected at the dichroic element may be used as a normalization signal for the signal - detected by at least one other photodetector - stemming from the sensing layer.

The above concept is suitable to deliver stable intensity referencing, and thus stable measurement results in the temperature range between 10°C and 100°C, and is estimated to give a reliable readout during tens of years.

In aspects, an integral solution is provided to determine the hydrogen concentration dissolved in transformer oil, without having the need of an external reference measurement, such as for the intensity of the light source. For this purpose, the optical sensor is increased in functionality by adding a dichroic element in between the end/tip of the optical fiber and the sensing layer or multilayer, or in the lightpath between a light source and the optical sensor. Coherent with the general principal of a dichroic filter, for at least one frequency emitted by the light source, the dichroic element is preferentially reflecting, and at at least one second frequency emitted by the light source, it mainly transmits light. This provides at least two simultaneous measurements, from which the incident intensity I₀ can be derived, and therefrom the reflection R of the sensing stack can be extracted - which are both required for determination of the dissolved hydrogen content in transformer oil.

According to an aspect, an optical gas sensing system, in particular the control unit thereof may further comprise a network interface for connecting the system to a data network, in particular a global data network. The data network may be a TCP/IP network such as the Internet. The system is operatively connected to the network interface for carrying out commands received from the data network. The commands may include a control command for controlling the system to carry out a task such as a measurement, a self-test, a calibration, or the like. In this case, the control unit is adapted for carrying out the task in response to the control command. The commands may include a status request. In this case, the control unit may be adapted for sending measurement data and/or status information to the network interface, and the network interface is adapted for sending the information over the network, e.g., in response to a status request. The commands may include an update command including update data. In this case, the control unit is adapted for initiating an update in response to the update command and using the update data.

According to further aspects, an electrical equipment with an insulation liquid is provided, wherein an optical sensor of the optical gas sensing system as described herein is immersed in the insulation liquid (i.e. partially immersed so that the optical sensor is at least in partial contact with the insulation liquid).

### Detailed Description of the Figures and Embodiments

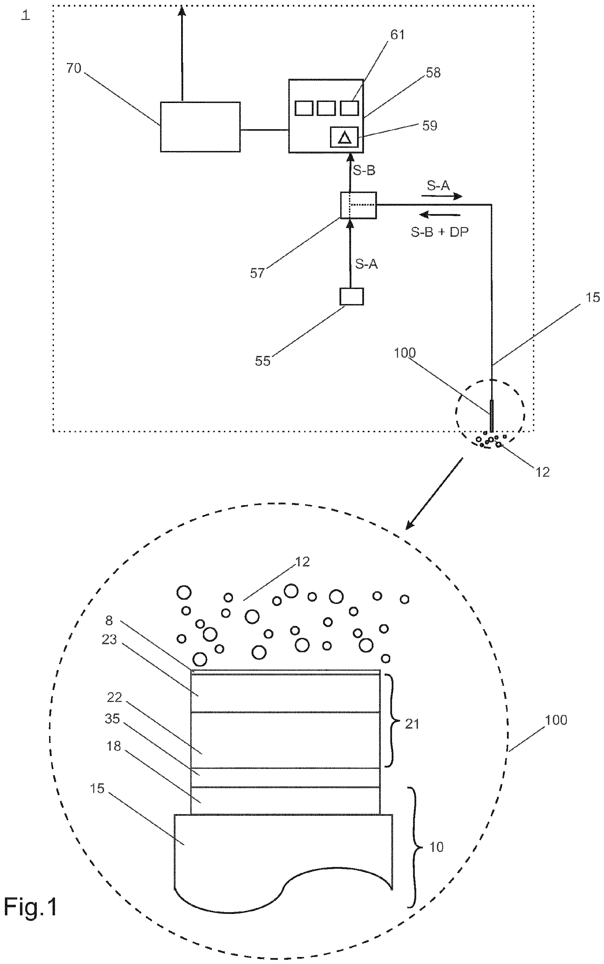

Fig. 1 shows an exemplary optical gas sensing system 1 for sensing hydrogen in a fluid 12, comprising an optical sensor 100. The sensor 100 comprises a sensing element 21 with a sensing layer 22 and a catalyst layer 23. The optical sensor 100 is suitable for detecting hydrogen in a fluid 12 (schematically shown, with smaller circles representing dissolved hydrogen in the fluid, and bigger circles symbolizing oil molecules) which is in physical contact with the hydrogen sensor 100. The sensing element 21, typically being a multilayer, is coated to an end portion of the fiber core and cladding 18 of an optical fiber 15. The fiber core and cladding 18 may typically have an outer diameter of about 100 µm to 150 µm, more typically 110 to 130 µm, e.g. 125 µm, whereby the core itself has a typical diameter of about 8 to 10 µm. Different diameters are also applicable, in particular when multi-mode-fibers are employed. The optical fiber 15 is typically, but not necessarily, a single-mode fiber. The sensing layer 22 comprises a thin film of a metal alloy, wherein the metal alloy of the sensing layer 22 may typically have the following, non-limiting compositions: The alloy comprises Mg, Ni, and a component M, wherein M is at least one of Zr, Ta, and Hf. The alloy has the composition MgₓNi_{y}M_{z}, wherein x is from 40 to 59, y is from 10 to 40, and z is from 10 to 40, in combinations where the numbers add up to 100. Other (non-limiting) suitable materials for the sensing layer are Mg-Ti alloys, and Y alloys.

The catalyst layer 23 comprises either Pd, a Pd alloy, or a different metal. In some embodiments, the sensing layer 22 and the catalyst layer 23 may be integrated in one single layer, which is typically a Pd-alloy and so forms the sensing element 21. On top of the catalyst layer 23, towards the fluid 12, is provided a coating layer 8 to protect the catalyst layer 23 from oil components and also the sensing layer 22 from sensor-poisonous gases such as CO. The coating layer 8 may for example comprise Al₂O₃, PTFE, PMMA, or SiO₂. The optical fiber 15 together with its fiber core and cladding 18 are also referred to as a substrate 10 herein. The substrate 10 may also be differently realized in embodiments, for example as a flat glass or plastic body on which the layers described are coated.

In embodiments such as depicted in Fig. 1, between the sensing layer 22 and the end face of the fiber core 18, there is provided a dichroic element 35, which has the function of a reference-producing layer, and which is either located in the optical sensor 100 (as shown) or which may be located in the light path prior to the optical sensor 100 (not shown). Coherent with the general principal of a dichroic filter, the dichroic element 35 is preferentially reflecting light at a narrow first spectrum (peak frequency), while at at least one second frequency range it mainly transmits light. In embodiments, a light source 55 (see upper part of Fig. 1) couples light with a first (wavelength/frequency) spectrum via the optical fiber 15 into the optical sensor 100. The dichroic element 35 is configured to have a high reflectivity for a first spectral fraction (typically, a frequency peak) of the first spectrum and a high transmittance for at least a part of a second spectral fraction of the first spectrum. Therein, the term "high" is preferably defined as 50 percent or greater, more preferably 70 percent or greater. In embodiments, the dichroic element may be a single-layer, a multilayer, such as for example a Fabry-Pérot-type interferometer, a fiber bragg grating, or combinations of the former.

While in the embodiment of Fig. 1, light reflected by the sensing layer 22 is employed, in further embodiments light transmitted by the sensing layer 22 may be employed instead. In such embodiments, e.g., a further optical fiber may be placed behind the sensing layer 22 - with respect to the light coming from the light source 55 - to guide the transmitted light to the light detection unit 58 as described further below. In the following, this option is regarded to be implicitly included, while only the case of reflected light is described in detail.

In an embodiment, the light source 55 comprises a superluminescent LED (SLED). In comparison to a standard LED, an SLED has a considerable linewidth which may be from about 3 nm to about 100 nm, more typically from about 5 nm to about 70 nm. Thus, the SLED delivers light with a first spectrum S-A as was described above. Typically, the light source 55 has a main wavelength in the visible range (about 380 nm to about 780 nm), or in the infrared range from about 780 nm up to about 100 µm, more typically up to about 10 µm. Some non-limiting examples for suitable SLEDs are SLEDs having a wavelength of 670 nm at a linewidth (FWHM) of about 7 nm, or having a wavelength of about 770 nm at a linewidth (FWHM) of about 13 nm, or with a wavelength of about 1300 nm at a linewidth (FWHM) of about 20 nm, or with a wavelength of about 1530 nm at a linewidth (FWHM) of about 35 nm.

The optical fibers employed in the system are typically, but not necessarily single-mode-fibers. The light dispersion device 59, in Fig. 1 only for illustrational purposes having the symbol of a prism, may comprise at least one prism 60 and/or grating (not shown).

The dichroic element 35 provided in the light path between the light source 55 and the sensor element 21 reflects a first spectral fraction DP of the incoming light which is produced by the light source. Thereby, the dichroic element 35 and the light source 55 are typically adapted so that the first spectral fraction DP reflected by the dichroic element 35 is a small part (a peak) from the first spectrum S-A delivered by the light source 55. Hence, the remaining light having passed the dichroic element covers the largest part of the first spectrum, is guided towards the sensing layer 22. At the sensing layer 22, the light is reflected in accordance with the reflectance properties of the sensing layer 22. As was extensively laid out further above, the respective reflectance (value) is dependent on the hydrogen partial pressure at the sensing layer 22, and thus dependent on the hydrogen partial pressure (or hydrogen concentration) in the fluid 12 surrounding the optical sensor 100, e.g., a transformer oil.

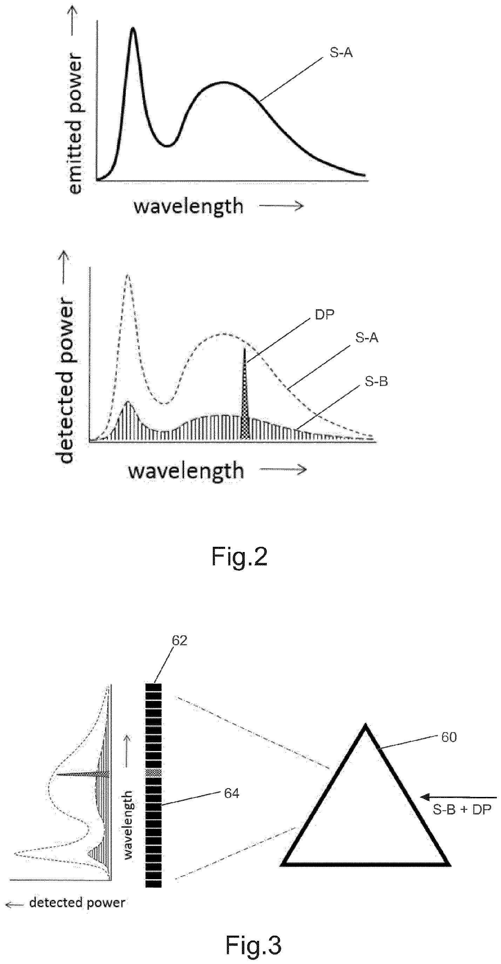

According to embodiments, in a method of determining a gas concentration in a fluid, the above described system according to embodiments is employed as follows. Light with a first spectrum S-A (see Fig. 2), coming from the light source 55, is coupled into the optical sensor 100. A typically narrow, first spectral fraction DP is reflected back by the dichroic element 35 prior to reaching the sensing layer 22. The frequency peak representing the first spectral fraction DP is shown in the lower part of Fig. 2. The remainder of the first spectrum S-A, missing the first spectral fraction DP, then reaches the sensing layer 22. It is reflected at the sensing layer 22 according to the reflectance of the sensing layer 22, whereby the reflectance is dependent on the hydrogen partial pressure at the sensing layer 22. In typical embodiments having sensing layers as described herein, and having a light source 55 emitting predominantly in the visible range, the reflectance value of the sensing layer 22 is typically - but not necessarily - largely independent from the light frequency. Thus, the light reflected by the sensing layer 22 is a second spectral fraction S-B having substantially a similar frequency spectrum as the incoming first spectrum S-A from the light source, but has a significantly lower intensity (due to the reflection process) and also lacks the first spectral fraction DP.

The second spectral fraction S-B, reflected at the sensing layer 22, and the first spectral fraction DP reflected at the dichroic layer are both reflected back towards a beam splitter 57 (see Fig. 1), where they are directed towards the light detection unit 58. The light coupled into the light detection unit 58 is dispersed by the light dispersion device 59. This is schematically shown in Fig. 3, where the light dispersion device is a prism 60. The dispersed light, which comes out of the prism 60 having an angular distribution according to its wavelengths, is then detected with at least two photodetectors 61. In the example according to embodiments as shown in Fig. 3, the photodetectors have the form of a CCD array 62, having a plurality of CCD elements 64. A control unit 70 (see Fig. 1) is operatively coupled to the light detection unit 58 and receives information about the signals from the CCD array 62. The control unit 70 employs an intensity information for the first spectral fraction DP (resulting from the reflection at the dichroic element 35) of the dispersed light as a normalization information. As the first spectral fraction DP was reflected with a known reflectance value at the dichroic element 35, the hydrogen partial pressure at the sensing layer 22 may be derived from the intensity information derived from the second spectral fraction S-B, hence the remainder of the first spectrum S-A except the peak of the first spectral fraction DP. As can be seen in Fig. 2 and Fig. 3, the second spectral fraction is mainly the first spectrum multiplied by the reflectance value (which is smaller than 1) of the sensing layer 22. When taking into account the intensity of the first spectral fraction DP, the control unit 70 may thus determine the reflectance of the sensing layer 22, while possible failure sources like fluctuations of the intensity of the light source 55 are implicitly accounted for and thus neutralized. Differently expressed, the peak of the first spectral fraction DP, reflected by the dichroic element 35, is employed to normalize the measurement values derived from the reflection at the sensing layer 22.

Typically, the emission spectrum of the light source 55 such as an SLED, the parameters of the prism 60, and the dimensions of the CCD array 62 are configured and arranged with respect to each other. Thereby, it is aimed to achieve that the reflected light, after dispersion, is projected to preferably cover a majority, or all, of the CCD elements 64 of the CCD array 62.

It is understood that the described optical sensors 100 and detection systems have to be characterized prior to their use in order to obtain the data mentioned above about the relation between hydrogen partial pressure, temperature and reflectance R of the optical sensor. As such optical sensors can be reproduced with high precision, this might only be necessary for a prototype. The obtained data then may be reused in the mass production process.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An optical gas sensing system for sensing hydrogen in a fluid (12), comprising:
- an optical sensor (100) comprising a fiber (15), the fiber including at an end portion a sensor element (21) with a sensing layer (22) configured to change its dielectric properties depending on a gas partial pressure at the sensing layer (22),
- at least one light source (55) for coupling light with a first spectrum into the optical sensor (100),
- a dichroic element (35) provided in the light path between the light source (55) and the sensor element (21),
- a light detection unit (58) comprising a light dispersion device (59) and at least two photodetectors (61), wherein the light detection unit is configured for detecting light reflected by the dichroic element (35) and light reflected or transmitted by the sensor element (21), after it has passed the light dispersion device (59), with the at least two photodetectors (61),
- a control unit (70) operatively coupled to the light detection unit (58).

2. The system of claim 1, wherein the dichroic element (35) is configured to have a high reflectivity for a first spectral fraction of the first spectrum and a high transmittance for at least a part of a second spectral fraction of the first spectrum, wherein high is preferably defined as 50 percent or greater.

3. The system of claims 1 or 2, wherein the control unit (70) is configured to determine a gas partial pressure at the optical sensor (100) from the reflectivity or transmission of the sensing layer (22) which is obtained by taking into account: the intensity of the light at at least one frequency reflected or transmitted by the sensing layer (22), and an intensity of the light reflected by the dichroic element (35) as a normalization parameter.

4. The system of any preceding claim, wherein the dichroic element (35) comprises at least one of:
a. a single-layer,
b. a multilayer,
c. a fiber bragg grating.

5. The system of any preceding claim, having at least one of the following properties:
a. the light source (55) is a superluminescent LED (SLED), a diode, or a laser diode,
b. the optical fiber (15) is a single-mode-fiber,
c. the light dispersion device (59) comprises a prism (60) and/or a grating, and
d. the photodetectors (61) are CCD elements (64) of a CCD array (62).

6. The system of any preceding claim, wherein the first spectrum is in the visible range or in the infrared range.

7. The system of any preceding claim, wherein
- the light source (55) is an SLED, and wherein the SLED light is coupled into the optical sensor (100) to be partially reflected by the dichroic element (35) and partially reflected or transmitted by the sensing layer (22) of the optical sensor (100),
- wherein the reflected light is guided by at least one fiber to a prism (60),
- wherein the prism (60) is arranged such that light dispersed by the prism is guided onto a CCD array (62) having a first dimension along which CCD elements (64) of the CCD array (62) are arranged,
- wherein the emission spectrum of the SLED, the prism and the CCD array (62) are each configured and arranged with respect to each other such that the reflected light is dispersed into a spectrum which spreads over a majority of the CCD elements (64).

8. The system of any preceding claim, wherein the optical sensor (100) is a hydrogen sensor comprising a metal hydride as a sensing layer (22) and preferably further comprises a catalyst layer (23).

9. The system of any preceding claim, further comprising a network interface for connecting the system to a data network, wherein the control unit (70) is operatively connected to the network interface for carrying out commands received from the data network and/or to send measurement data to the data network.

10. A method of determining a gas concentration in a fluid (12), comprising:
providing a sensing system (1) of any of claims 1 to 8;
coupling light with a first spectrum into the optical sensor (100) having a sensing layer (22);
dispersing light which is reflected by the dichroic element (35), and light reflected or
transmitted by the sensing layer (22), with a light dispersion device (59);
detecting the dispersed light with at least two photodetectors (61), preferably with an array of photodetectors (61);
using an intensity information for a first spectral fraction of the dispersed light as a normalization information to determine the gas partial pressure from the intensity information derived from at least a second spectral fraction.

11. The method of claim 10, wherein the dichroic element is configured to have a high reflectivity over a first fraction of the first spectrum and a high transmittance for at least a part of a second fraction of the first spectrum, wherein high is preferably defined as 50 percent or greater.

12. The method of claim 10 or 11, wherein light is coupled into the optical sensor (100), and
- is partially reflected by the dichroic element (35) and partially reflected or transmitted by the sensing layer (22),
- is guided to a prism (60), from where the dispersed light is guided onto a CCD array (62) having a first dimension along which the comprised CCD elements (64) are arranged,
wherein the emission spectrum of a light source (55) being a LED, the prism (60) and the CCD array (62) are configured with respect to each other such that the reflected light is dispersed into a spectrum which is projected to preferably spread over a majority of the CCD elements (64).

13. The method of any of claims 10 to 12, wherein the optical sensor (100) is a hydrogen sensor, comprising a metal hydride as a sensing layer (22), and preferably further comprises a catalyst layer (23).

14. The method of any of claims 10 to 13, wherein the detected gas is hydrogen, and wherein the hydrogen concentration in the fluid (12), being an insulation liquid of a power transformer, is detected.

15. Use of the combination of a dichroic element (35), an optical sensor (100), a prism (60), and a CCD array (62) for the detection of hydrogen in the insulation liquid of a power transformer.
